# EUROPÄISCHE PATENTSCHRIFT

(11) **EP 0 447 392 B1**
(45) Veröffentlichungstag und Bekanntmachung des Hinweises auf die Patenterteilung: **01.09.1993**
(21) Anmeldenummer: 89900011.1
(22) Anmeldetag: 08.12.1988
(51) Int. Cl.: H02M 1/12

(54) **MEHRPHASEN-STROMRICHTER MIT GLÄTTUNGSDROSSEL**
POLYPHASE POWER CONVERTER WITH RIPPLE FILTER CHOKE
CONVERTISSEUR POLYPHASE AVEC BOBINE DE LISSAGE

(43) Veröffentlichungstag der Anmeldung: 25.09.1991
(73) Patentinhaber: SIEMENS AKTIENGESELLSCHAFT, 80333 München (DE)
(72) Erfinder: HOLLMANN, Rolf, D-8522 Herzogenaurach (DE)
(86) Internationale Anmeldenummer: DE8800753
(87) Internationale Veröffentlichungsnummer: WO9006618

(56) Entgegenhaltungen:
- EP-A- 0 012 742
- EP-A- 0 193 067
- US-A- 3 792 286
- US-A- 3 903 469

## Beschreibung

Die Erfindung betrifft einen Stromrichter nach dem Oberbegriff des Anspruchs 1.

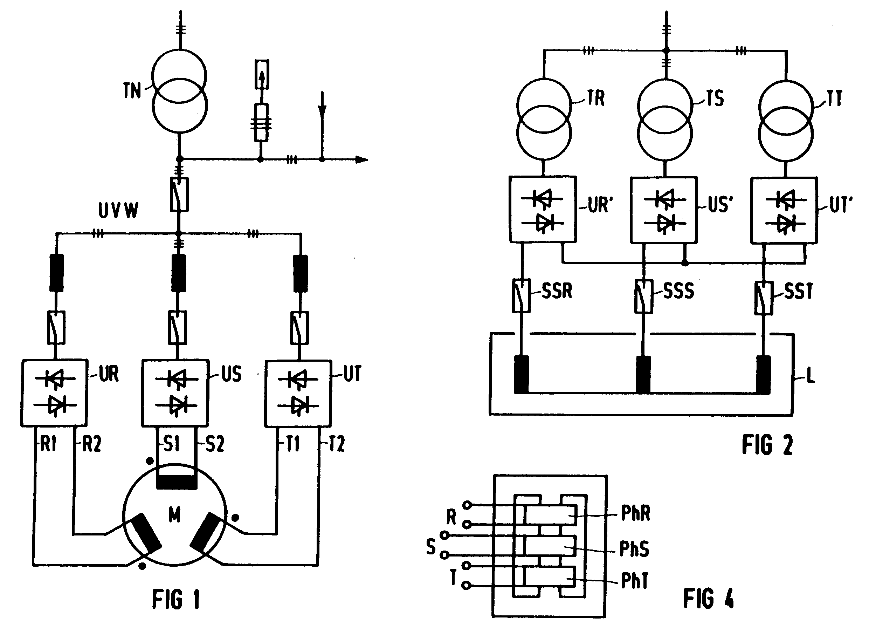

Ein derartiger, aus B. R. Pelly: "Thyristor Phase-Controlled Converters and Cycloconverters", Wiley-Interscience, 1971, S. 212-215 bekannter Direktumrichter enthält für jeden Phasenausgang einen vom Eingangssystem gespeisten Teil-Umkehrstromrichter mit einem Wechselstromausgang. Im einfachsten dreiphasigen Fall, der in Fig. 1 gezeigt ist, ist der Wechselstromausgang des Teilumrichters UR mit seinen beiden Polen R1 und R2 an eine Einphasenlast angeschlossen, und im Teilumrichter ist über entsprechende Ventile jeder der beiden Wechselstrompole in beiden Stromführungsrichtungen mit jedem der drei Phaseneingänge U, V, W des speisenden Netzes verbunden. Der einem Phaseneingang über eines der Ventile entnommene Wechselstrom fließt über eine Einphasenlast und eines der anderen Ventile in den anderen Phaseneingang zurück.

Durch entsprechendes Steuern der Ventile kann daher unabhängig von den anderen Teilumrichtern erreicht werden, daß an der Einphasenlast eine Sinusform für Strom und Spannung eingehalten wird. Entsprechendes gilt für die Teilumrichter US und UT und deren Wechselstromausgänge mit den Polen S1, S2 und T1, T2. Dabei ist also jeder Pol eines Wechselstromausganges mit einem anderen Pol nicht direkt, sondern über die Last angeschlossen und es ist möglich, z.B. einem Drehstrommotor M, dessen Drehstromwicklungen galvanisch voneinander getrennt sind, ein sinusförmiges System von Spannungen und Strömen aufzuprägen, bei dem sich ein gleichmäßiges Drehmoment ausbildet (vgl. auch Rudolf Lappe u.a.: "Thyristor-Stromrichter für Antriebsregelungen", VEB Verlag Technik Berlin 1970, S.280).

Dieser Direktumrichter, dessen Ausgänge lastseitig offen und nur über die Last miteinander verbunden sind ("offene Direktumrichterschaltung", d.h. die beiden Pole jedes Teilumrichters sind an die Last angeschlossen, ohne daß ein Pol direkt mit einem Pol eines anderen Teilumrichters angeschlossen ist), ist jedoch wirtschaftlich bedeutungslos. Denn abgesehen von anderen Nachteilen, wie z.B. einer Strom- und Spannungsüberwachung für jeden Teilumrichter, ist die Ausnutzung gering. Wird nämlich der für den Motor gewünschte sinusförmige Strom dadurch erzeugt, daß der Umrichter mit einer verhältnismäßig hohen Schaltfrequenz auf eine sinusförmige Ausgangsspannung gesteuert wird, so sind dadurch nur Spannungsamplituden erreichbar, die entsprechend unter dem Pegel der Speisespannung an den Phaseneingängen U, V und W liegen. Es ist daher in der Regel ein Netztransformator TN erforderlich und die Teilumrichter sind auf die entsprechende Ausgangsspannung zu bemessen. Die Anordnung besitzt einen schlechten netzseitigen Leistungsfaktor.

Dieser wird üblicherweise dadurch verbessert, daß von einer rein sinusförmigen Spannung abgewichen und durch Überlagerung einer Spannungskomponente mit dreifacher Frequenz eine Trapezform angenähert wird. Dies erhöht bei gegebener Baugröße die Leistungsabgabe des Umrichters erheblich. Für das Drehmoment und dessen Gleichmäßigkeit und für die Nutzleistung des Motors sind aber Stromoberwellen dritter Ordnung, wie sie bei dieser Schaltung in den Einphasenlasten durch die Spannungsoberwelle angetrieben werden, ohne weitere Bedeutung, da sie in allen drei Phasenwicklungen gleichphasig sind und somit für das System der Phasenströme nur eine Nullpunktverschiebung darstellen. Die 3. Harmonische der Einphasenströme bringt daher nur unnötige Belastungen und Verluste und sollte vermieden werden.

Dazu ist in der EP-A1-193 067 ein Direktumrichter in "offener Schaltung" vorgeschlagen, der an eine sechsphasige Last angeschlossen ist. Diese besteht aus zwei Systemen von Einzellasten, wobei jedes Einzellast-System einen der Pole eines Teilumrichters mit je einem Pol der anderen Teilumrichter verbindet. Dadurch sind zwar im Betrieb jeweils zwei Teilumrichter in Reihe geschaltet, die galvanische Verbindung ihrer Ausgangspole erfolgt aber stets über die Last, und da die Teilumrichter jeweils eine um 120° phasenverschobene Spannung liefern, bilden die verketteten Spannungen jedes Teillast-Systems ein Spannungssystem, in dem sich die 3. Harmonische der Spannung weghebt und daher eine dritte Oberfrequenz des Stromes nicht anzutreiben vermag. Eingangsseitig sind die Teilumrichter über Kommutierungsdrosseln an die Wicklungen eines gemeinsamen Drehstromtransformators angeschlossen. Bei dieser speziellen Schaltung zeigt sich aber, daß sich Oberwellen, die durch Taktung der jeweils in Reihe geschalteten Teilumrichter entstehen, sehr ungünstig verstärken.

Die den Stromfrequenzen dritter Ordnung entsprechende Nullpunktverschiebung kann aber bekanntlich durch eine Schaltung unterdrückt werden, bei der jeweils nur ein Pol eines Teilumrichters an einen Phasenanschluß der Last gelegt wird, während die anderen Pole aller Teilumrichter miteinander verbunden werden, wie dies in Fig. 2 dargestellt ist. Die Einzellasten können dabei im Dreieck geschaltet oder an einen gemeinsamen, freien Sternpunkt angeschlossen sein. Bei dieser Schaltung fließt also der über einen Umrichter einer Eingangsphase entnommene Strom über die Last und einen anderen Umrichter ins Eingangsnetz zurück, die Teilumrichter sind daher in Reihe geschaltet und trotz einer trapezförmigen Spannungsform können harmonische Ströme dritter Ordnung nicht fließen.

Allerdings muß bei dieser Schaltung verhindert werden, daß die Eingangsphasen über die Stromrichter und deren miteinander verbundenen Pole kurzgeschlossen werden und dadurch hohe Ausgleichsströme fließen. Daher ist jeder Eingang eines Teilumrichters UR', US' und UT' über einen eigenen Drehstromtransformator TR, TS und TT an die Eingangsphasen U, V und W angeschlossen. Dies stellt einen ganz erheblichen Aufwand dar. Hinzu kommt, daß nunmehr die Bauteile wegen der Verkettung der Spannungen auf die doppelte Spannung isoliert, ausgelegt und überwacht werden müssen. In Fig. 2 ist daher für jeden Teilumrichter ein eigener Schnellschalter SSR, SSS und SST vorgesehen, der von entsprechenden Einzelüberwachungen für die Stromrichterspannungen angesteuert wird, wobei außerdem diese einzelnen Schalter nicht unabhängig voneinander betätigt werden dürfen. Sollen mehrere Lasten, z.B. mehrere mit unterschiedlichen Frequenzen und Spannungen zu speisende Motoren, über jeweils einen eigenen Direktumrichter betrieben werden, so erfordern diese Direktumrichter auch eigene Transformatoren.

Diese Nachteile der Schaltung nach Fig. 2 wiegen zwar die Vorteile nicht auf, die durch den Ersatz der offenen Direktumrichterschaltung nach Fig. 1 erreicht werden, jedoch könnte auf die Einzeltransformatoren und die mit dieser Schaltung verbundenen Nachteile verzichtet werden, wenn es gelänge, bei der Anordnung nach Fig. 1 die dritte Harmonische des Stromes und weitere Oberwellen zu dämpfen, ohne gleichzeitig auch die Grundwellenamplitude zu verringern.

Aus der US-A- 3 903 469 und der US-A- 3 792 286 ist es bekannt, miteinander magnetisch gekoppelte Drosseln auf der Ausgangsseite von Umrichtern zu verwenden, die das Nullsystem, dh. gleichphasige Ströme, unterdrücken.

Aufgabe der Erfindung ist daher, für einen Stromrichter mit je einem Teilumrichter je Phase eine Anordnung zu finden, die Oberwellen des Stromes wesentlich stärker dämpft als Grundwellen.

Diese Aufgabe wird durch die Merkmale des Anspruchs 1 gelöst.

Zwischen jedem Teilumrichterausgang eines Direktumrichters und dem entsprechenden Phasenanschluß der Last ist also wenigstens eine Wicklung der allen Teilumrichtern gemeinsamen Drosselspule so angeordnet, daß für jeden Phasenstrom eine Reihenschaltung aus Last und einer Drosselwicklung entsteht, wobei die Wicklungen auf der Drossel so ausgebildet sind, daß der Koppelfaktor möglichst nahe an Eins liegt. Dabei sind die einzelnen Drosselspulen jeweils auch vom Laststrom in der entsprechenden Phase durchflossen und die Drosseln verkoppeln die Ströme.

Alternativ oder zusätzlich ist vorgesehen, die Spannungen an den Phasenausgängen miteinander zu verkoppeln. Die Phasenausgänge sind dann nicht nur an die Last, sondern auch an die Wicklungen des gemeinsamen Transformators angeschlossen. Für jeden Phasenausgang ist also eine parallel zur Last liegende Wicklung vorgesehen und die Wicklungen sind über einen gemeinsamen magnetisierbaren Kern miteinander verkoppelt. Für die Magnetisierung heben sich die Grundwellen in den einzelnen Ausgängen des Stromrichters gegenseitig auf und es sind nur noch die Oberwellen wirksam.

Vorteilhafte Weiterbildungen der Erfindung sind in den Unteransprüchen gekennzeichnet und werden anhand von 6 weiteren Figuren erläutert.

Es zeigen:
Figur 1 einen Direktumrichter mit den bereits erwähnten offenen lastseitigen Anschlüssen,
Figur 2 einen Direktumrichter in der bereits erwähnten Reihenschaltung,
Figur 3 das Prinzip eines Direktumrichters nach der Erfindung,
Figur 4 ein bevorzugtes Beispiel der gemeinsamen Drossel,
Figur 5 einen Direktumrichter zur bevorzugten Speisung eines Drehstrommotors, wobei jeder Ausgang eines Teilumrichters an eine getrennte Ständerwicklung angeschlossen ist und
Figur 6 einen Direktumrichter nach der Erfindung zur Speisung einer Last, die aus zwei Systemen von Einzellasten besteht und die, Teilumrichter dadurch in Reihe geschaltet sind, daß die beiden Pole eines Teilumrichters jeweils über die Einzellasten eines Systems an die entsprechenden Pole der anderen Teilumrichter angeschlossen sind,
Fig. 7 einen Direktumrichter nach der Erfindung für sechspulsigen Betrieb, bei dem sowohl die Ströme wie die Spannungen miteinander verkoppelt sind, und
Fig. 8 einen derartigen Direktumrichter nach der Erfindung für zwölfpulsigen Betrieb.

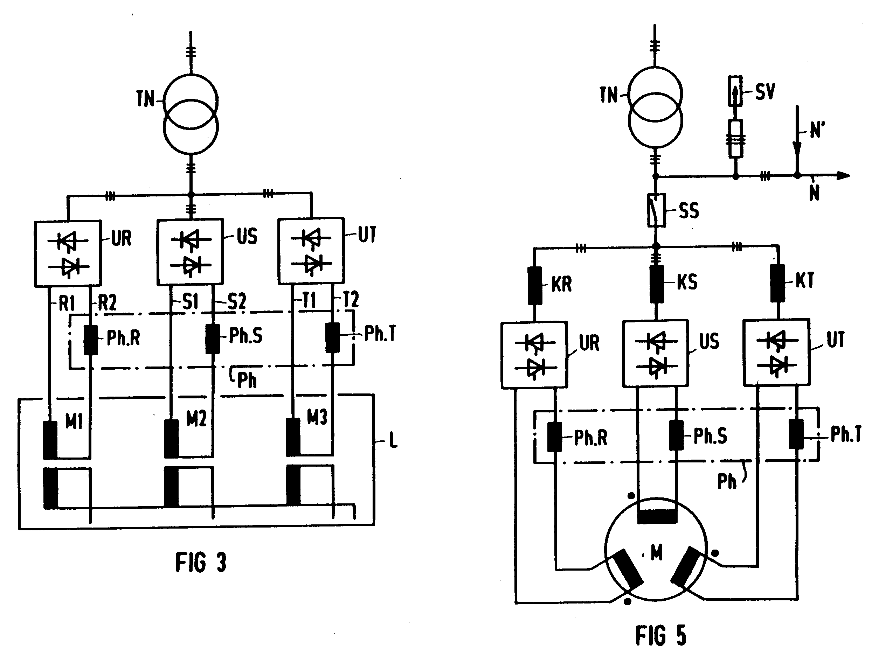

Das Ausführungsbeisiel der Fig. 3 baut auf der eingangs erläuterten "offenen Direktumrichterschaltung" der Fig. 1 auf.

Der Direktumrichter besteht aus den Teil-Umrichtern UR, US, UT, die jeweils mit ihren Polpaaren R1, R2 bzw. S1, S2 bzw. T1, T2 die Phasenausgänge R, S und T für eine entsprechende Last L liefern, die aus den einzelnen,gegeneinander isolierten Wechselstromlasten M1, M2 und M3 besteht. Es kann sich dabei z.B. um getrennte Ständerwicklungen eines Motors oder um Primärwicklungen eines Transformators handeln, dessen Sekundärwicklungen im Dreieck oder in der dargestellten Sternschaltung angeordnet sind und beliebige Lasten speisen. An der Stelle der galvanischen Verbindung zwischen den Polen R2, S2 und T2, die bei der Reihenschaltung nach Fig. 2 die 3. Harmonische eliminiert, tritt eine magnetische Verkopplung der Ausgangsphasen, wobei der Koppelfaktor möglichst maximal, d.h. möglichst nahe an Eins gewählt wird.

Für die Ausgänge R, S und T des Direktumrichters ist daher ein entsprechendes magnetisches Koppelelement Ph vorgesehen, das insbesondere eine gemeinsame Drossel sein kann, die für jeden Phasenausgang eine eigene Drosselwicklung PhR, PhS und PhT besitzt. Die Drosselwicklungen können auf einem gemeinsamen magnetischen Kern z.B. konzentrisch übereinander oder. wie in Fig. 5 dargestellt ist, geometrisch nebeneinander verschachtelt angeordnet sein.

Für die Magnetisierung dieser Drossel heben sich die Grundschwingungen der drei um 120° versetzten Phasenströme auf, die Drossel ist also wirkungslos. Für gleichphasige Oberschwingungen der Phasenströme verstärkt sich jedoch die Drosselwirkung, die dadurch eine selektive Glättung hervorruft. Die Drossel kann daher insbesondere auf eine Dämpfung der 3. Harmonischen ausgelegt werden, ohne gleichzeitig auch die Grundwelle zu dämpfen.

Da beim Ausführungsbeispiel der Fig. 3 die Phasenausgänge der Teilumrichter galvanisch voneinander getrennt sind, treten keine Ausgleichsströme auf, obwohl die Drehstromeingänge der Teilumrichter jeweils galvanisch miteinander verbunden sind. Eine ggf. erforderliche Anpassung der Spannungspegel an die Netzspannung kann daher durch einen Drehstromtransformator erfolgen, dessen Sekundärwicklungen allen Teilumrichtern gemeinsam sind. Es kann daher auf bei Stromrichtern häufig erforderliche Sonderkonstruktionen verzichtet und ein einfacher Netztransformator TN verwendet werden.

Fig. 5 zeigt die bevorzugte Speisung eines Drehstrommotors M als Last. Soll der Motor ein besonders gleichmäßiges Drehmoment erzeugen, so kann bekanntlich ein zweiter Direktumrichter verwendet werden, der ein um 30° elektrisch verschobenes Gleichspannungssystem liefert. Die anderen Spannungen dieses zweiten Direktumrichters können an den Sekundärwicklungen des Netztransformators TN über die Leitung N abgegriffen werden. Eine galvanische Trennung der Eingangskreise der verschiedenen Direktumrichter, wie sie bei Schaltungen nach Fig. 2 erforderlich sind, ist nicht notwendig. Es können sogar weitere Direktumrichter angeschlossen werden, die andere Lasten mit anderen Lastfrequenzen speisen. Bei der Erweiterung der erfindungsgemäßen Schaltung zu derartigen Systemen können auch ohne weiteres weitere Netztransformatoren an entsprechende Anschlüsse N' der Drehstrom-Sammelleitung N angeschlossen werden.

Gegenüber der Schaltung nach Fig. 2 ergibt sich also bei etwa gleichem Leistungsfaktor eine wesentliche Einsparung am Transformator, dessen Bauleistung z.B. um 21% geringer sein kann. Um für Kommutierungen in einem Teilumrichter unabhängig von den anderen Teilumrichtern stets den erforderlichen Strom zur Verfügung zu stellen, kann es in manchen Fällen vorteilhaft sein, zwischen dem Eingang der jeweiligen Teilumrichter und dem gemeinsamen Phaseneingang eine Zusatzdrossel KR, KS und KT anzuordnen. Dadurch ergibt sich eine einfachere Ausführung des Netztransformators gegenüber üblichen Stromrichtertransformatoren.

Auch der Schutz vor Überspannungen der Teilumrichter kann vereinfacht werden. Da die Teilumrichter galvanisch nicht verkettet sind, braucht der Lastkreis nur für die einfache Spannung und nicht mehr die doppelte Spannung wie bei Fig. 2 bemessen zu werden. Dies ergibt auch Einsparungen für Impulsübertrager, Istwertgeber usw. Eine Überspannung kann durch ein gemeinsames Schutzgerät SV am gemeinsamen Phaseneingang überwacht werden und häufig reicht es aus, dem gemeinsamen Phaseneingang einen gemeinsamen Schnellschalter SS vorzuschalten.

Die Erfindung ermöglicht somit, die Gesamtkosten für die Direktumrichterspeisung erheblich zu reduzieren.

Die Erfindung schafft also ein selektives Glättungsglied, das nicht auf die Grundfrequenz, sondern nur auf gleichphasige und von der Grundschwingung abweichende Schwingungen in mehreren Phasenausgängen eines Stromrichters wirkt. Die Erfindung kann daher auch da angewendet werden, wo an sich die dritte Harmonische bereits durch andere Maßnahmen unterdrückt ist.

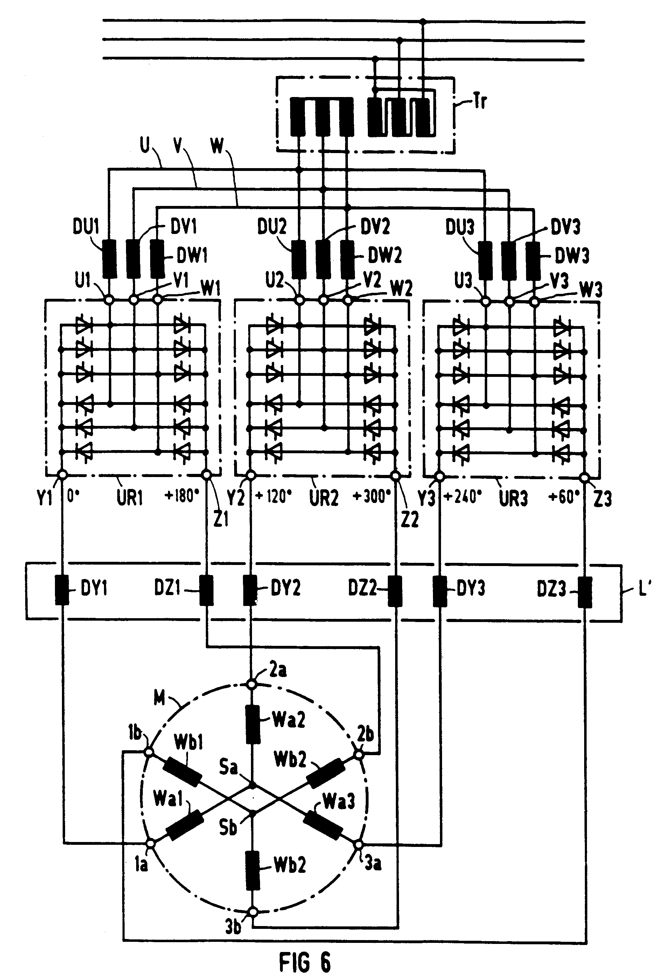

Als Beispiel hierfür ist in Fig. 6 die Speisung einer sechsphasigen Last mittels einer aus den drei Teilumrichtern UR1, UR2 und UR3 bestehenden Direktumrichters gezeigt, wie er in der eingangs erwähnten EP-A1-193 067 beschrieben ist. Wie im einzelnen dargestellt, besteht jeder Teilumrichter aus zwei antiparallel geschalteten gesteuerten Gleichrichterbrücken. Durch entsprechende Steuerung wird zwischen den Wechselstrom-Ausgangspolen Y1, Z1 bzw. Y2, Z2 bzw. Y3, Z3 jeweils eine trapezförmige Ausgangsspannung erzeugt, wobei diese Ausgangsspannungen gegeneinander um 120° phasenverschoben sind. Diese Wechselstromausgänge sind "offen", d.h. jeder Pol ist an einen Phasenausgang der Last angeschlossen. Ein lastunabhängiger, gemeinsamer Sternpunkt der Teilumrichter, wie er durch die galvanische Verbindung je eines Poles aller Teilumrichter in Fig. 2 gebildet ist, ist nicht vorhanden, vielmehr besteht die Last aus zwei Systemen von Teillasten, die z.B. von den Wicklungen einer Drehfeldmaschine gebildet werden können und jeweils im Stern geschaltet sind. Jeder dieser freien Sternpunkte Sa, Sb ist über eine Einzellast an jeweils einen Ausgangspol aller Teilumrichter angeschlossen. Eingangsseitig ist jeweils ein Phaseneingang U1, U2, U3 bzw. V1, V2, V3 bzw. W1, W2, W3 jedes Teilumrichters an einen allen Teilumrichtern gemeinsamen Phaseneingang U bzw. V bzw. W angeschlossen, wobei vorteilhaft zwischen diesen Phaseneingängen und dem jeweiligen Direktumrichtereingängen je eine Drossel DU1, DU2, DU3 bzw. DV1, DV2, DV3 bzw. DW1, DW2, DW3 angeordnet ist. Die Phaseneingänge sind über einen gemeinsamen Netztransformator Tr an das speisende Drehstromnetz angeschlossen.

Wie bereits eingangs erläutert wurde, können Ausgleichsströme zwischen den Teilumrichtern nur über die Last fließen, so daß eine transformatorische Entkopplung der Teilumrichter nicht erforderlich ist.

Die beiden Teillastsysteme sind gegeneinander um 60° versetzt, so daß sich unter Berücksichtigung der 120°-Verschiebung in den Ausgangsspannungen der drei Teilumrichter ergibt, daß das an die Ausgänge Y1, Y2, Y3 angeschlossene Teillastsystem Wa1, Wa2, Wa3 eine entgegengesetzte Phasenlage aufweist gegenüber dem an die Ausgänge Z1, Z2, Z3 angeschlossenen Teillastsystem Wb1, Wb2, Wb3. Ungeradzahlige Oberschwingungen, insbesondere eine harmonische dritte Ordnung des Stromes, können dabei nicht auftreten.

Trotzdem ist vorgesehen, alle sechs Phasenanschlüsse der Last über eine gemeinsame Verkopplungseinrichtung miteinander magnetisch zu verkoppeln. Diese Verkopplungseinrichtung L' kann z.B. wieder durch eine Drossel erreicht werden, deren gemeinsamer magnetischer Kern von Drosselwicklungen DY1, DZ1, DY2, DZ2, DY3, DZ3 umschlungen ist. Diese gemeinsame Drossel braucht nun nicht auf eine Glättung der dritten Harmonischen ausgelegt zu werden, sondern auf eine entsprechende Dämpfung von Oberschwingungen höherer Ordnung. Dadurch wird es möglich, die bei der bekannten Schaltung beobachteten störenden Oberschwingungen zu dämpfen, ohne daß die Drossel für die Grundschwingung eine Dämpfung darstellt.

Vorteilhaft ist auch,, daß diese gemeinsame Drossel bei unsymmetrischen Lasten in einer häufig durchaus erwünschten Weise auch dämpfend auf die Unsymmetrie wirken kann.

Bei den Anordnungen nach den Figuren 3 bis 6 fließt jeweils der Strom in einem Anschluß der Last auch durch die zugeordnete Drossel und den jeweiligen Teilumrichter. Die Drosseln verkoppeln die Ströme derart, daß Oberwellen gedämpft werden. Stromlose Pausen, wie sie bei Direktumrichtern durch vorübergehendes Sperren der Teilumrichter bisher vorgegeben werden, um einen störungsfreien Übergang von einer positiven Stromhalbwelle zur negativen Stromhalbwelle sicherzustellen, treten dabei auch in den Phasenströmen auf.

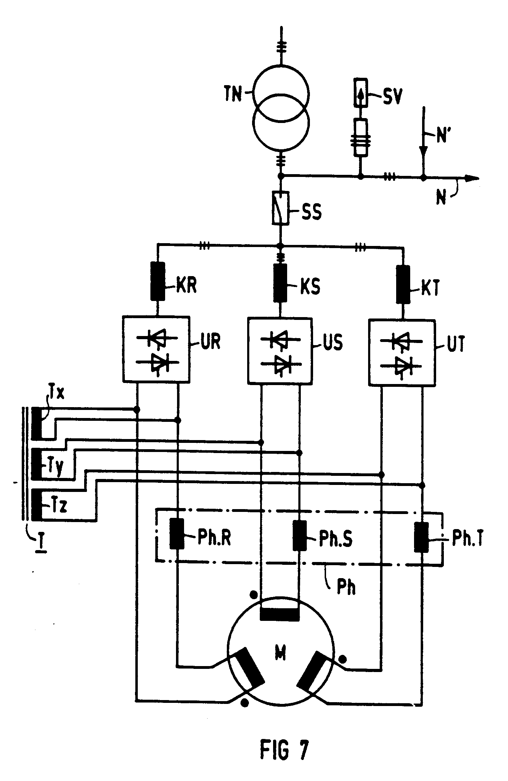

Fig. 7 zeigt eine Ausführungsform der Erfindung, die von Fig. 5 ausgeht, aber ein gemeinsamer Transformator T vorgesehen ist, der die Ausgangsspannung des Teilumrichters UR mit den Ausgangsspannungen der Teilumrichter US und UT verkoppelt. Dieser Transformator enthält die auf einem gemeinsamen Eisenkern aufgebrachten Wicklungen Tx, Ty und Tz, die jeweils parallel zu den Einphasenlasten der Teilumrichter an deren Wechselstromausgänge angeschlossen sind.

Dieser Transformator ist daher zwar hinsichtlich seiner Isolierung auf die gesamte Ausgangsspannung ausgelegt, für die Magnetisierung jedoch heben sich die Grundwellen in den Phasenausgängen gegenseitig weg. Lediglich die Oberwellen vermögen über diese transformatorische Verkopplung den Teilumrichter-Ausgängen Spannungen einzuprägen, in deren Folge über eine Transformatorwicklung und die zugehörige Last auch dann ein Strom fließen kann, wenn der entsprechende Teilumrichter während der Polaritätsumkehr seines Ausgangsstromes vorübergehend gesperrt ist.

Die Einphasenlasten werden daher auch während der stromlosen Pausen ihrer Teilumrichter mit einem lückenlosen Wechselstrom gespeist. Die Drosseln Ph.R, Ph.S und Ph.T können dabei unter Umständen auch weggelassen werden.

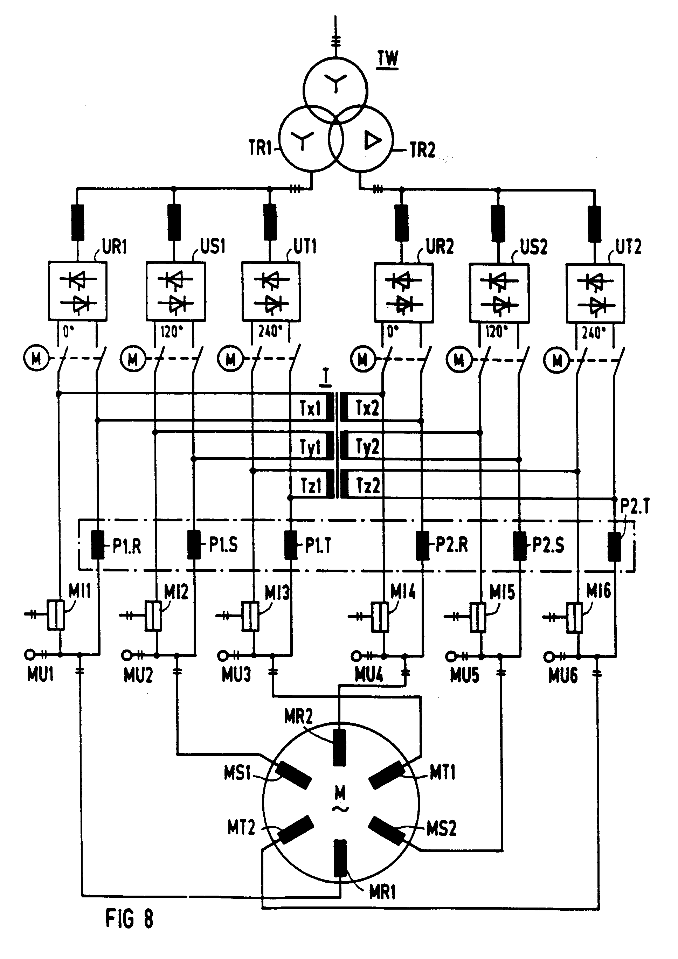

Fig. 8 zeigt eine Direktumrichter-Anordnung zur 12-pulsigen Speisung einer 6-phasigen Last. Diese besteht aus einer ersten Gruppe von Einphasenlasten MR1, MS1, MT1 und aus einer zweiten Gruppe von Einphasenlasten MR2, MS2, MT2. Jede Einphasenlast ist galvanisch mit dem Wechselstromausgang nur eines einzigen Teilumrichters verbunden. Zur ersten Gruppe von Einphasenlasten gehört also ein Direktumrichter mit den Teilumrichtern UR1, US1 und UT2, während die Teilumrichter UR2, US2 und UT2 einen zweiten Teilumrichter bilden.

Die Eingänge dieser beiden Direktumrichter sind entsprechend den Figuren 3 und 4 an den Sekundärwicklungen TR1 und TR2 eines gemeinsamen Transformators TW zusammengeführt, die unterschiedlich geschaltet sind. Die an die Primärwicklung dieses Transformators TW angeschlossene Netzspannung erzeugt also für die beiden Direktumrichter zwei gegeneinander um 30° phasenverschobene Drehspannungssysteme. Jeder Direktumrichter wird mit gleichem Steuerwinkel betrieben und seine Teilumrichter liefern ein 6-pulsiges System um 120° phasenverschobener Wechselspannungen und beide Wechselspannungssysteme bilden wegen der unterschiedlichen Verschaltung der Sekundärwicklungen TR1 und TR2 ein 6-phasiges, 12-pulsiges Drehspannungssystem für die Last.

Vorteilhaft sind die Ströme des ersten Direktumrichters über die Drosselwicklungen P1.R, P1.S und P1.T nicht nur miteinander, sondern auch über den gemeinsamen Drosselkern mit den Drosselwicklungen P2.R, P2.S und P2.T des zweiten Direktumrichters verkoppelt. Daher tragen jeweils die Ausgangskreise aller Teilumrichter zur Dämpfung von Stromoberwellen im Ausgang eines Teilumrichters bei.

Eine andere Möglichkeit ist, die Ausgangsspannung eines Teilumrichters über den gemeinsamen Transformator T' nicht nur mit den Ausgangsspannungen der Teilumrichter des gleichen Direktumrichters, sondern auch mit den Ausgangsspannungen des anderen Direktumrichters zu verkoppeln. Der Transformator T' besteht dann aus den Wicklungen Tx1, Ty1, Tz1, Tx2, Ty2, Tz2, die jeweils parallel zu den Einphasenlasten MR1, ...MT2 geschaltet und alle auf einen gemeinsamen magnetisierbaren Transformatorkern gewickelt sind.

Fig. 8 zeigt, daß beide Möglichkeiten miteinander kombiniert werden können.

Allerdings ist dabei zu beachten, daß - im Gegensatz zu den Figuren 5 und 5 - der Eingangsstrom eines Teilumrichters bei den Ausführungsformen der Figuren 7 und 8 nicht mehr zu jedem Zeitpunkt gleich dem Strom in der entsprechenden Einphasenlast ist; vielmehr bildet die jeweilige Transformatorwicklung eine zusätzliche Spannungsquelle für über die Last fließende Strom-Oberwellen.

Werden daher für den Betrieb der Last die Istwerte der Phasenströme und/oder Phasenströme benötigt, so kann es erforderlich werden, zu deren Messung entsprechende Wandler MI1,... MI6 bzw. MU1,...MU6 vorzusehen.

## Patentansprüche

1. Stromrichter zur Direktumrichtung, mit einem Teilumrichter (UR, US, UT) mit Wechselstromausgang für jeden Phasenausgang, wobei jeweils ein Eingang aller Teilumrichter (UR, US, UT) an einen gemeinsamen Phaseneingang galvanisch angeschlossen und jeder Pol (R2, S2, T2) der Wechselstromausgänge über die an den Phasenausgängen angeschlossene, eine offene Schaltung aufweisende, Last (L) mit einem anderen Pol (R1, S1, T1) verbunden ist,
**dadurch gekennzeichnet,**
daß den Wechselstromausgängen eine gemeinsame Drossel (Ph) und/oder ein gemeinsamer Transformator (T) zugeordnet ist, wobei einzelne, einen gemeinsamen magnetisierbaren Kern aufweisende Wicklungen (Ph.R, Ph.S, Ph.T bzw. Tx, Ty, Tz) der Drossel (Ph) bzw. des Transformators (T) jeweils zwischen den Wechselstromausgängen und der Last (L) bzw. parallel zur Last (L) angeordnet sind.

2. Stromrichter nach Anspruch 1,
**dadurch gekennzeichnet,**
daß dem gemeinsamen Phaseneingang ein gemeinsamer Schnellschalter (SS) für die Teilumrichter (UR, US, UT) vorgeordnet ist.

3. Stromrichter nach Anspruch 1 oder 2,
**dadurch gekennzeichnet,**
daß zwischen dem gemeinsamen Phaseneingang und dem Eingang der Teilumrichter (UR, US, UT) eine Zusatzdrossel (KR, KS, KT) angeordnet ist.

4. Stromrichter nach Anspruch 1, 2 oder 3,
**dadurch gekennzeichnet,**
daß die Last (M) aus zwei Teil-Lastsystemen (Wa, Wb) besteht und jedes Teil-Lastsystem (Wa, Wb) jeweils über eine Wicklung (DY, DZ) der gemeinsamen Drossel (L) an einen Pol (Y, Z) jedes Teilumrichters (UR, US, UT) angeschlossen ist.

## Claims

1. Power converter for direct conversion, having a partial converter (UR, US, UT) with an a.c. output for each phase output, a respective input of each of the partial converters (UR, US, UT) being electrically connected to a common phase input and each terminal (R2, S2, T2) of the a.c. outputs being connected to another terminal (R1, S1, T1) by way of the load (L) which is connected to the phase outputs and has an open circuit, **characterised in that** a common choke (Ph) and/or a common transformer (T) is associated with the a.c. outputs, with individual windings (Ph.R, Ph.S, Ph.T and Tx, Ty, Tz, respectively) of the choke (Ph) and the transformer (T) being arranged between the a.c. outputs and the load (L), and in parallel with the load (L), respectively.

2. Power converter according to claim 1, characterised in that a common high-speed circuit-breaker (SS) for the partial converter (UR, US, UT) is arranged before the common phase input.

3. Power converter according to claim 1 or 2, characterised in that an additional choke (KR, KS, KT) is arranged between the common phase input and the input of the partial converter (UR, US, UT).

4. Power converter according to claim 1, 2 or 3, characterised in that the load (M) comprises two partial load systems (Wa, Wb), and each partial load system (Wa, Wb) is connected to a terminal (Y, Z)of each partial converter (UR, US, UT) by way of a winding (DY, DZ) of the common choke (Ph).

## Revendications

1. Convertisseur statique pour la conversion directe du courant alternatif, comportant un convertisseur de fréquence partiel (UR,US,UT) possédant une sortie à courant alternatif pour chaque sortie de phase, et dans lequel respectivement une entrée de tous les convertisseurs de fréquence partiels (UR,US,UT) sont raccordés galvaniquement à une entrée commune de phase, et chaque pôle (R2,S2,T2) des sorties à courant alternatif est relié à un autre pôle (R1,S1,T1) par l'intermédiaire de la charge (L) qui est raccordée aux sorties de phase et possède un circuit ouvert, caractérisé par le fait
qu'aux sorties à courant alternatif est associée une bobine commune (Ph) et/ou un transformateur commun (T), différents enroulements (Ph.R, Ph.S, Ph.T ou Tx, Ty, Tz), qui possèdent un noyau commun aimantable, de la bobine (Ph) ou du transformateur (T) étant disposés respectivement entre les sorties à courant alternatif et la charge (L) ou en parallèle avec la charge (L).

2. Convertisseur statique suivant la revendication 1, caractérisé par le fait qu'un interrupteur rapide commun (SS) pour les convertisseurs de fréquence partiels (UR,US,UT) est branché en amont de l'entrée commune de phase.

3. Convertisseur statique suivant la revendication 1 ou 2, caractérisé par le fait qu'une bobine de self supplémentaire (KR,KS,KT) est branchée entre l'entrée commune de phase et l'entrée des convertisseurs de fréquence partiels (UR,US,UT).

4. Convertisseur statique suivant la revendication 1, 2 ou 3, caractérisé par le fait que la charge (M) est constituée par deux systèmes de charge partiels (Wa, Wb) et que chaque système de charge partiel (Wa, Wb) est raccordé respectivement, par l'intermédiaire d'un enroulement (DY, DZ) de la bobine de self commune (L), à un pôle (Y,Z) de chaque convertisseur de fréquence partiels (UR, US, UT).
